# EUROPEAN PATENT APPLICATION

(11) **EP 2 410 455 A1**
(43) Date of publication of application: **25.01.2012**
(21) Application number: 11172117.1
(22) Date of filing: 30.06.2011
(51) Int. Cl.: G06F 21/02, G06F 21/24

(54) **Intelligent attached storage**

(30) Priority: 22.07.2010 US 841444
(71) Applicant: SAMSUNG ELECTRONICS CO., LTD., Suwon-si Gyeonggi-do 442-742 (KR)
(72) Inventor: Greeley, Burnham Horace, 442-742 Gyeonggi-do (KR)
(74) Representative: Jenkins, Richard Gavin

(57) **Abstract**

An intelligent storage device for providing authentication services and secure access to files is provided. The intelligent storage device includes a storage unit for storing a plurality of files, a communication unit for connecting the intelligent storage device to the external device via a wired or wireless connection, and a processor for controlling access to the files by an external device connected to the intelligent storage device, according to input from a user via the intelligent storage device.

## Description

### BACKGROUND OF THE INVENTION

### 1. Field of the Invention:

Aspects of the present invention relate to intelligent attached storage devices. More particularly, aspects of the present invention relate to an attached storage device capable of restricting access to secure documents by an untrusted computer.

### 2. Description of the Related Art:

Conventional removable storage devices generally permit the computer to which the storage devices are attached full access to the content stored therein. For example, when a user inserts a USB storage device into a corresponding USB slot of a computer, the user is able to access all of the information contained in the storage device via the computer.

Recently, smartphones and other portable media devices are serving a double purpose as a removable storage device. For example, many portable music players are capable of acting not only as a music player, but also as a storage device. However, even these portable devices still provide unlimited access to the files stored in the portable device. Although this unlimited access is not a problem if the portable device is attached to a trusted computer, problems arise when these devices are attached to untrusted computers.

When conventional removable storage devices are attached to an untrusted computer, the untrusted computer has full access to files stored on the device, giving rise to potential breaches of security. Although files can be encrypted, the user generally enters a decryption key or passphrase via the untrusted computer. Malicious software (malware) on the untrusted computer would then have access to the decryption key/passphrase. In addition, the untrusted computer can obtain access even to encrypted files once the files have been decrypted by the untrusted computer.

An aspect of the present invention is to address at least the above-mentioned problems and/or disadvantages and to provide at least the advantages described below. Accordingly, an aspect of the present invention is to provide an apparatus to securely manage access to files in an untrusted environment.

According to an aspect of the present invention, an intelligent storage device is provided. The device includes a storage unit for storing a plurality of files, a communication unit for connecting the intelligent storage device to the external device via a wired or wireless connection, and a processor for controlling access to the files by an external device connected to the intelligent storage device, according to input from a user via the intelligent storage device.

According to another aspect of the present invention, a method of controlling access to files on an intelligent storage device is provided. The method includes determining that the intelligent unit is connected to the external device, verifying the authenticity of the user via an input unit of the intelligent storage unit, after the authenticity of the user is verified, providing access to files stored in the intelligent storage device by the external device according to a defined access control scheme, if an access control scheme is defined.

According to another aspect of the present invention, a method of secure authentication is provided. The method includes receiving, in an intelligent storage device, a request for authentication from an external device, requesting authentication from a user, receiving authentication information from the user via an input unit of the intelligent storage device, authenticating the user based on the received authentication information, and transmitting a result of the authentication to the external device or a second device.

According to another aspect of the present invention, a method of secure application execution is provided. The method includes receiving, in an intelligent storage device, a request to execute an application stored in the intelligent storage device; requesting authentication from a user; receiving authentication information from the user via an input unit of the intelligent storage device; authenticating the user based on the received authentication information; and when the user is authenticated, executing the stored application.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 illustrates a computing environment according to an exemplary embodiment of the present invention;
FIG. 2 illustrates an intelligent storage device according to an exemplary embodiment of the present invention;
FIG. 3 is a flowchart of a method of limiting access to files in an untrusted environment, according to an exemplary embodiment of the present invention; and
FIG. 4 is a flowchart of a method of authentication in an untrusted environment, according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

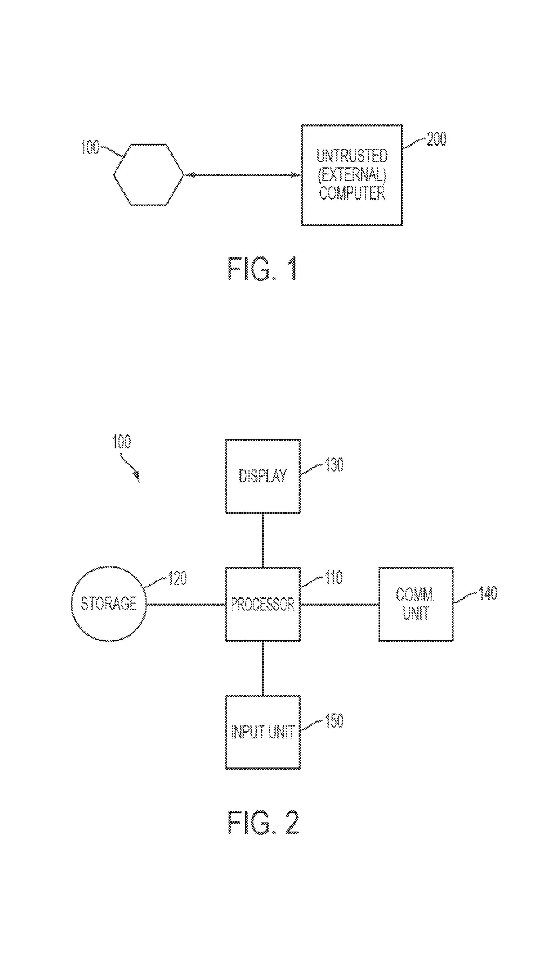

FIG. 1 illustrates a computing environment according to an exemplary embodiment of the present invention.

Referring to FIG. 1, the system includes an intelligent storage device 100 attached to an untrusted computer 200. The untrusted computer 200 could be any computer not recognized as a secure or trusted system. For example, the untrusted computer 200 could be a computer in a cyber-café or in a hotel's business center. Such computers could have Trojan horses, viruses, or other malware installed. Attempting to access files in an unprotected storage device could result in a breach of security. However, the intelligent storage device 100 limits access to the files stored in the intelligent storage device 100. The access is controlled by the user via the intelligent storage device 100, instead of the untrusted computer 200. For example, if the files are encrypted, the user may input the decryption key via the intelligent storage device 100 instead of the untrusted computer 200. The untrusted computer 200 would therefore not have access to the decryption key.

The authentication information is described below as a passphrase or a decryption key. However, the authentication information is not limited to these examples, and may be any type of information for authenticating a user. For example, instead of a passphrase, biometric information may be employed, and the intelligent storage device 100 may include a unit for obtaining the biometric information.

The intelligent storage device 100 may be any device capable of storing files and accepting user input independently of another device. For example, the intelligent storage device 100 could be a USB flash memory device with an input unit to enable a user to allow access to files stored in the flash memory. The intelligent storage device 100 could also be a more fully featured device, such as a smartphone, personal digital assistant, personal entertainment device (e.g., a portable music player or portable game player), or the like.

FIG. 2 illustrates the intelligent storage device 100 according to an exemplary embodiment of the present invention.

Referring to FIG. 2, the intelligent storage device 100 includes a processor 110, a storage unit 120, a display 130, a communication unit 140, and an input unit 150. According to other exemplary embodiments, the intelligent storage device 100 may include additional and/or different units. Similarly, the functionality of two or more of the above units could be integrated into a single component. For example, the display 130 could be embodied as a touchscreen, including the functionality of the input unit 150.

The processor 110 controls the operation of the intelligent storage device 100, and more particularly controls access to files stored in the storage unit 120. For example, if the files are encrypted, the processor 110 can control the decryption of the files via a decryption key entered through the input unit 150. The processor 110 may also selectively permit access to the files by the untrusted computer 200, leaving the remainder hidden and accessible only via the input unit 150 and the display 130.

The processor 110 may also perform additional access or verification functions. The processor may perform these additional functions in conjunction with input from the user by way of the input unit 150, and output to the display 150. Once the user is verified, the processor 110 controls the storage unit 120 and the communication unit 140 to make the appropriate files accessible to the untrusted computer 200.

To perform these access and verification functions, the processor 110 may execute a control program stored in the storage unit 120. According to an exemplary embodiment of the present invention, when the control program is executed, a dialog is displayed on the display 130 to permit the user to enter a decryption key or passphrase to allow selected files to be accessible by the untrusted computer 200. Another dialog can be displayed to allow the user to control which files or directories are accessible to the untrusted computer 200.

In an exemplary embodiment, the control program displays a dialog on the display 150 in response to a request from the untrusted computer 200. When the untrusted computer 200 requests access to a file stored in the storage unit 120, the control program displays a dialog requesting whether to permit access to the requested file. The dialog could request a passphrase for authentication or merely provide a confirm/deny option. The user inputs a response via the input unit 150. Once the user has input a response to the request, the control program processes the request based on the user's response. For example, if the user enters the correct passphrase or indicates confirmation of the request, the control program permits access by the untrusted computer 200 to the requested file. On the other hand, if the user does not enter the correct passphrase or denies the request, the control program does not permit access by the untrusted computer 200 to the requested file.

The control program executed by the processor 110 may also permit the user to define access controls for the files stored in the storage unit 120. The control program may display a user interface for the user to define the files or directories which the untrusted computer 200 will be permitted to access. The user can specify the particular files to be accessible, or may specify which directories or sub-directories will be accessible to the untrusted computer 200. A plurality of access controls may be stored in the storage unit 120. The user may select one of these stored access controls to limit access to the storage unit 120 by the untrusted computer 200.

According to another exemplary embodiment, the processor 110 may execute one or more secure applications. For example, the processor 110 may execute a browser program stored in the storage unit 120 to provide a secure browsing environment. In this case, the browser can be displayed via a display of the untrusted computer 200. Alternatively, the browser can be stored on the untrusted computer, but if sensitive information such as a password needs to be entered, the browser would control the processor 110 to display a dialog on the display 130 indicating that the password is to be entered via the input unit 150. The user then inputs the password via the input unit 150 instead of an input unit of the untrusted computer 200. The password could be encrypted by the processor 110 or the control program. The untrusted computer 200 would therefore not have access to the password.

In addition to browsers, other applications may request verification of the user's identity through the intelligent storage device. The verification occurs via the input unit 150, not an input unit of the untrusted computer 200. The authentication information is kept within the intelligent storage device 100 and not transmitted to the untrusted computer 200. In this fashion the user can operate in a trusted environment despite the presence of the untrusted computer 200.

For example, keyloggers are programs that record the input of keys, and transmit this information to a third party. Keyloggers are often used to record passwords, which then can be used by an unscrupulous third party to obtain access to private information, for identity theft, or for other malicious purposes. If the user were to enter the password on an input unit of the untrusted computer 200, a keylogger installed on the untrusted computer 200 could record this information, thereby compromising the security of important files or accounts. However, according to exemplary embodiments of the present invention, these passwords are not entered through an input unit of the untrusted computer 200, but through the input unit 150 of the intelligent storage device 100. A keylogger installed on the untrusted computer 200 would therefore not be able to record the password.

According to still another exemplary embodiment, the untrusted computer 200 may boot an operating system stored in the storage unit 120. In this case, the user can enter a command via the input unit 150 to boot the stored operating system. For example, the user could select whether to boot an operating system stored in the untrusted computer 200 or the operating system stored in the intelligent storage device 100. This selection could occur via the input unit 150 or via the untrusted computer 200. If the user chooses to boot an operating system stored in the storage unit 150, the processor 110 verifies the authenticity of the user. Once the user is authenticated, the processor 110 controls the intelligent storage device 100 to make the intelligent storage device 100 available to the untrusted computer 200 as a boot device, thereby causing the untrusted computer 200 to boot the stored operating system. This permits the user to operate the untrusted computer 200 in a mostly trusted environment, and to limit exposure to malicious code that may be present in the operating system of the untrusted computer 200.

The storage unit 120 stores files and programs selectively accessible by the untrusted computer 200 according to the control of the user and the processor 110. Accessibility of the files and programs stored in the storage unit 120 may be limited to single files or to particular parts of the file structure, such as particular directories or subdirectories. As discussed above, one or more files may be encrypted for additional security. In addition, the user may specify access controls to limit access to particular files or directories. The processor 110 and the input unit 150 may be used to control the decryption of the encrypted files and the specification of access controls. Alternatively, once the user has been authenticated via the input unit 150, the control program may accept access control schemes from the user via the untrusted computer 200.

The display 130 outputs information to the user. The user controls the access control of the files via information input through the input unit 150 and information output through the display 130. The input unit 150 similarly receives the user's input, including specification of the limits of access by the computer as well as any decryption keys. The display 130 may be provided as a Liquid Crystal Display (LCD). In this case, the display 130 may include a controller for controlling the LCD, a video memory in which image data is stored and an LCD element. If the LCD is provided as a touch screen, the display 130 may perform a part or all of the functions of the input unit 150, as mentioned above.

The communication unit 140 enables communication between the intelligent storage device 100 and the untrusted computer 200. The communication unit may be any wired or wireless connection, including USB, Ethernet, Bluetooth, Wi-Fi, and others. The information made accessible to the untrusted computer 200 via the communication unit 140 is only the information specified as accessible by the user. Moreover, any decryption keys or passphrases used to enable access are not transmitted to the untrusted computer 200 via the communication unit 140. Rather, decryption and access control is performed by the processor 110 in response to user input via the input unit 150, and not by any information transmitted to or received from the untrusted computer 200. Since the decryption keys and passphrases are kept within the intelligent storage device 100, any malware (viruses, Trojan horses, malicious applications or hardware, etc.) on the untrusted computer 200 will not be able to obtain this information, thereby preserving the integrity of the files in the storage unit 120.

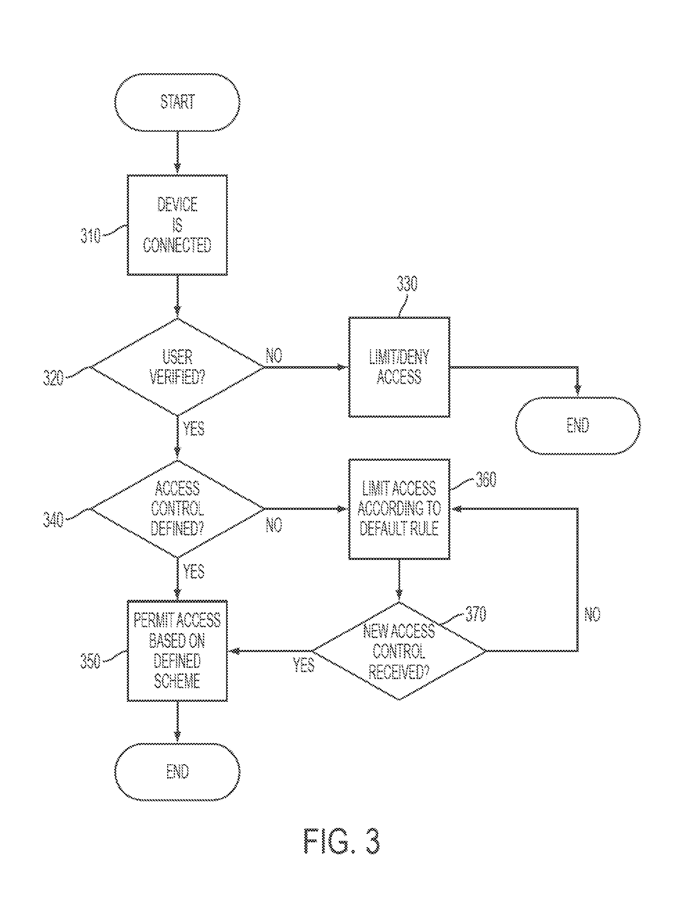

FIG. 3 is a flowchart of a method of limiting access to files in an untrusted environment, according to an exemplary embodiment of the present invention.

Referring to FIG. 3, in step 310 the processor 110 determines that the intelligent storage device 100 is connected to an untrusted computer, such as the untrusted computer 200. The processor 110 may use any of a number of mechanisms to detect the connection, and the particular mechanism may depend upon the protocol by which the connection is established.

In step 320, the processor 110 determines whether the user is authorized. The processor 110 may, for example, display a dialog on the display 140 to request a key or passphrase from the user. If the verification process fails, then in step 330 the processor 110 limits access to the storage unit 120 by the untrusted computer 200. The processor 110 may, for example, limit access to predetermined files or directories, or prevent the untrusted computer 200 from accessing the storage unit 120 entirely.

If the processor 110 determines that the user is authorized, the processor 110 determines in step 340 whether an access control for the untrusted computer 200 has been defined. If an access control has been defined, then in step 350 the processor 110 limits access by the untrusted computer 200 to the storage unit 120 according to the defined access control.

If no access control has been defined, the processor 110 limits access by the untrusted computer according to a default rule in step 360. For example, the rule could be one of unlimited access by the untrusted computer 200, or on the other hand, a rule of no access by the untrusted computer 200. A default rule limiting access to particular files or sections (e.g., a "public folder") could also be used.

In step 370, the processor 110 waits for the user to define an additional access control via the input unit 150 or to select a previously defined access control stored in the storage unit 120. If no access control is defined or selected, the processor 110 continues to limit access based on the default rule in step 360. If the user does define or select an access control, the processor 110 adjusts the access permitted by the untrusted computer 200 accordingly in step 350.

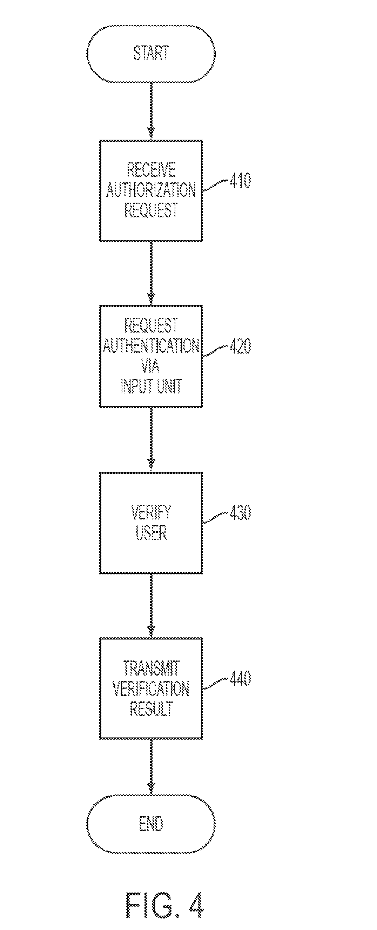

FIG. 4 illustrates a flowchart of a method of authentication in an untrusted environment, according to an exemplary embodiment of the present invention.

Referring to FIG. 4, the processor 110 receives an authentication request from a program executing on the untrusted computer 200 in step 410. The program may be, for example, a browser requesting authentication to log in to a secure site. The browser may be programmed to request authentication from an intelligent storage when attempting to log in to a secure site. Alternatively, a browser plug-in could be provided, either separately or installed from the intelligent storage device 100, to request authentication from the intelligent storage device 100.

In step 420, the processor 110 authenticates the user via the display 130 and the input unit 150. For example, the control program can display a dialog on the display 130 requesting the user to enter a passphrase via the input unit 150. Once the user has entered the passphrase via the input unit 150, the control program verifies the user in step 430. In step 440, the processor 110 transmits the result of the verification to the program. If the program is a browser, the processor 110 may transmit the verification result directly to the site requesting authentication. Since the user inputs the passphrase (or other authentication information) via the input unit 150, the untrusted computer does not have access to this information. As a result, the chance of the authentication information being compromised is reduced.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An intelligent storage device, comprising:
a storage unit for storing a plurality of files;
a communication unit for connecting the intelligent storage device to the external device via a wired or wireless connection; and
a processor for controlling access to the files by an external device connected to the intelligent storage device, according to input from a user via the intelligent storage device.

2. The intelligent storage device of claim 1, further comprising:
an input unit for receiving the input from the user for controlling access to the files in the storage unit; and
a display unit for displaying a graphical user interface (GUI) via which the user controls access to the files stored in the storage unit.

3. The intelligent storage device of claim 2, wherein the processor controls access to the files stored in the storage unit, according to an access control scheme defined by the user, via the input unit.

4. The intelligent storage device of claim 2, wherein the processor displays a Graphical User Interface (GUI) for defining an access control scheme of the files stored in the storage unit, stores the access control in the storage unit, and limits access to the files by the external device based on the access control scheme.

5. The intelligent storage device of claim 4, wherein the processor receives an input selecting a particular access control scheme stored in the storage unit, the processor limits access to the files by the external device according to the selected access control scheme, and the processor displays the GUI on the display unit and receives the input selecting the access control scheme from the input unit.

6. The intelligent storage device of claim 5, wherein the processor displays the GUI on a display unit of the external device and receives the input selecting the access control scheme from an input unit of the external device.

7. The intelligent storage device of claim 1, wherein the processor executes an application stored in the storage unit after authenticating the user.

8. The intelligent storage device of claim 2, wherein the processor receives an authentication request from the external device, displays a user interface on the display for entering authentication information, receives authentication information from the user via the input unit, authenticates the user based on the received authentication information, and transmits a result of the authentication to the external device or a second device.

9. The intelligent storage device of claim 1, wherein the processor makes an operating system stored in the storage unit available to the external device for booting.

10. A method of controlling access to files on an intelligent storage device by an external device, the method comprising:
determining that the intelligent unit is connected to the external device;
verifying the authenticity of the user via an input unit of the intelligent storage unit;
after the authenticity of the user is verified, providing access to files stored in the intelligent storage device by the external device according to a defined access control scheme, if an access control scheme is defined.

11. The method of claim 10, further comprising:
if no access control scheme is defined, preventing the external device from accessing the files stored in the intelligent storage device,
if the user is not authenticated, preventing the external device from accessing the files stored in the intelligent storage device.

12. The method of claim 10, further comprising:
when the external device requests access to a file, presenting a dialog to the user on a display unit of the intelligent storage device to inform the user of the access request; and
providing or denying access to the file according to a determination of the user received via the input unit of the intelligent storage device.

13. The method of claim 10, further comprising:
receiving a new access control scheme from the user via the input unit of the intelligent storage device;
applying the new access control scheme to limit access to the files on the intelligent storage device by the external device, and
storing the received new access control scheme in a storage unit of the intelligent storage device.

14. The method of claim 10, further comprising:
receiving an input from the user selecting an access control scheme stored in the intelligent storage device; and
limiting access by the external device to the files stored in the intelligent storage device according to the selected access control scheme.

15. the method of claim 10, wherein the verifying the authenticity of the user comprises:
receiving, in an intelligent storage device, a request for authentication from an external device;
requesting authentication from a user;
receiving authentication information from the user via an input unit of the intelligent storage device;
authenticating the user based on the received authentication information; and
transmitting a result of the authentication to the external device or a second device.

16. The method of claim 15, further comprising:
installing a browser plug-in on the external device, the browser plug-in requesting the authentication from the intelligent storage device when the user accesses a site requiring authentication via a browser installed on the external device.

17. The method of claim 10, wherein the verifying the authenticity of the user comprises:
receiving, in an intelligent storage device, a request to execute an application stored in the intelligent storage device;
requesting authentication from a user;
receiving authentication information from the user via an input unit of the intelligent storage device; and
authenticating the user based on the received authentication information.

18. The method of claim 17, wherein the request to execute the application comprises a request to boot an operating system stored in the intelligent storage device, and the executing of the stored application comprises making the operating system available to an external device for booting.

19. The method of claim 18, wherein the request to boot the operating system is received from the external device or the input unit.
